Europäisches Patentamt

European Patent Office

Office européen des brevets

(11) Publication number: **0 093 215**
**B1**

## EUROPEAN PATENT SPECIFICATION

(45) Date of publication of patent specification: **02.10.85**

(21) Application number: **82302290.0**

(22) Date of filing: **05.05.82**

(51) Int. Cl.⁴: **B 01 D 11/02, B 05 B 1/04**

(54) Liquid distribution device.

(43) Date of publication of application:
**09.11.83 Bulletin 83/45**

(45) Publication of the grant of the patent:
**02.10.85 Bulletin 85/40**

(84) Designated Contracting States:
**BE CH DE FR GB IT LI NL**

(56) References cited:
**FR-A-2 036 509**
**FR-A-2 068 895**
**FR-A-2 405 752**

(73) Proprietor: **FABRIQUES DE TABAC REUNIES S.A.**
**Quai Jeanrenaud 3 P.O. Box 11**
**CH-2003 Neuchâtel-Serrières (CH)**

(72) Inventor: **Brosy, Jacques**
**Avenue des Alpes 3**
**CH-2000 Neuchatel (CH)**

(74) Representative: **Bass, John Henton et al**
**REDDIE & GROSE 16 Theobalds Road**
**London WC1X 8PL (GB)**

Courier Press, Leamington Spa, England.

# Description

This invention relates to a liquid distribution device for distributing liquids uniformly along a substantially linear zone. The apparatus is suitable, for example, for extraction beds, particularly, in tobacco extraction apparatus.

It is often desired to extract one or more soluble components from solid substrates, such as tobacco. In the case of tobacco, nitrate may be removed by washing the tobacco with water, removing the nitrate from the water by, for example, crystallisation or dialysis techniques, and returning the denitrated eluant to wash further tobacco. Thus, the eluted components, other than nitrate, rapidly reach a steady state concentration in the eluant, and so only nitrate suffers wet removal from the tobacco.

A typical apparatus for liquid extraction uses one or more rotating perforated pipes to deliver the extracting liquid to the top of a cylindrical bed of the material to be extracted. The water is drained from the bed and may be recycled through the rotating perforated pipe.

If one attempts to use a rotating pipe distributor for extraction purposes where solid matter tends to become entrained in the extracting liquid, for example in the extraction of tobacco, recycling of the liquid carries the entrained solids back to the distributor, where they will tend to clog or block the perforations through which the liquid is spread on the bed. If the perforations are enlarged and inevitably reduced in number to prevent this, then the distribution ceases to be uniform, and instead the delivery of liquid is localised onto annular zones of substrate immediately beneath the perforations.

Similar problems can arise whenever a distributor arm which moves relative to a substrate bed is used to spread a liquid containing coarse suspended solid matter.

Thus, it is desired to produce a liquid distribution device which provides a largely uniform distribution of liquid over its length and does not retain solids entrained in the eluant.

In accordance with the invention, there is provided a liquid distribution device comprising an elongate chamber defined by first and second opposed side walls which incline towards each other over at least the lower portion of their height to form a slot, a cylinder bearing a closed and an open end which opens into the chamber through the first side wall, and a liquid inlet through which liquid can be introduced substantially tangentially into the cylinder the arrangement being such that the liquid leaving the cylinder enters the chamber, impinges on the second side wall and leaves the chamber through the slot in a uniform sheet.

A preferred embodiment of the invention will be described, with reference to the drawings, in which

Fig. 1 shows a side elevation of a liquid distribution device according to the invention;

Fig. 2 shows a top plan view of the device shown in Fig. 1;

Fig. 3 shows a section along the line III—III of Fig. 1;

Fig. 4 illustrates liquid extraction apparatus utilising the device of Figs. 1 to 3; and

Fig. 5 shows a section along the line V—V of Fig. 4.

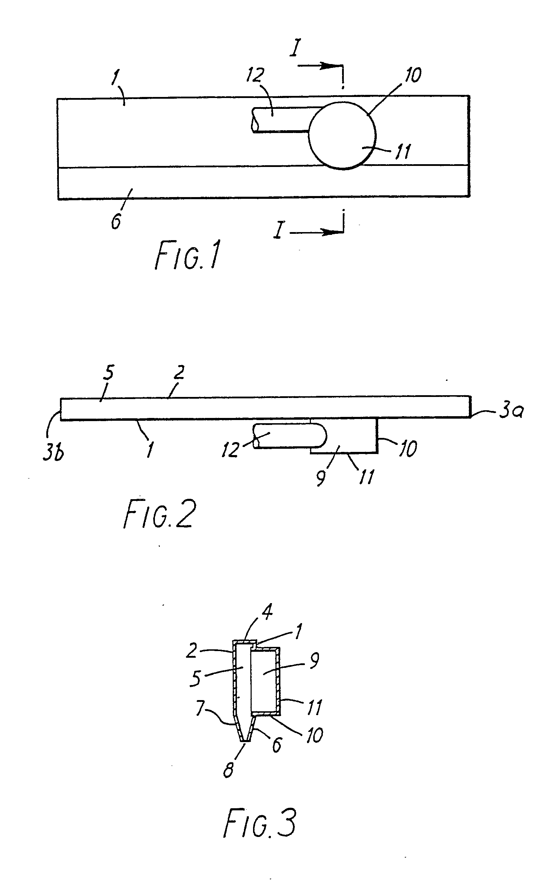

The distribution device of Figs. 1, 2 and 3 comprises first and second side walls in the form of iron plates 1 and 2 respectively which with two end walls 3a and b and an upper wall 4, define a hollow arm or chamber 5. The lower portions 6 and 7 of the plates 1 and 2 respectively incline towards each other to form a slot 8 running the length of the chamber 5. A cylinder 9 having a side wall 10 is closed at one end by an end wall 11 and at the other end opens through the first plate 1 into the chamber 5 defined by the iron plates 1 and 2. This cylinder has a liquid inlet pipe 12 entering substantially tangentially through the side wall. The pipe 12 is connected to a source of eluant liquid.

In use, eluant is supplied under pressure through the pipe 12 into the cylinder 9, and flows around the side wall 10 of the cylinder in a clockwise direction as viewed in Fig. 1. The rotating stream of water enters the chamber 5, impinges upon the second iron plate 2 and is spread substantially uniformly along the plate. The eluant then flows down the second plate 2 and leaves the chamber through the narrower slot 8 in a substantially uniform sheet.

For best results, the relative dimensions and spacing of the side walls 1 and 2 and the dimensions and positioning of the cylinder 10 are adjusted to give the most uniform distribution of liquid along the length of the arm. It has been found preferable for the cylinder to be fitted into the side wall of the arm at a position closer to the end 3a of the arm remote from the liquid inlet 12, preferably at a position 2/3 of the distance along the arm towards that end, as shown in Figs. 1 and 2.

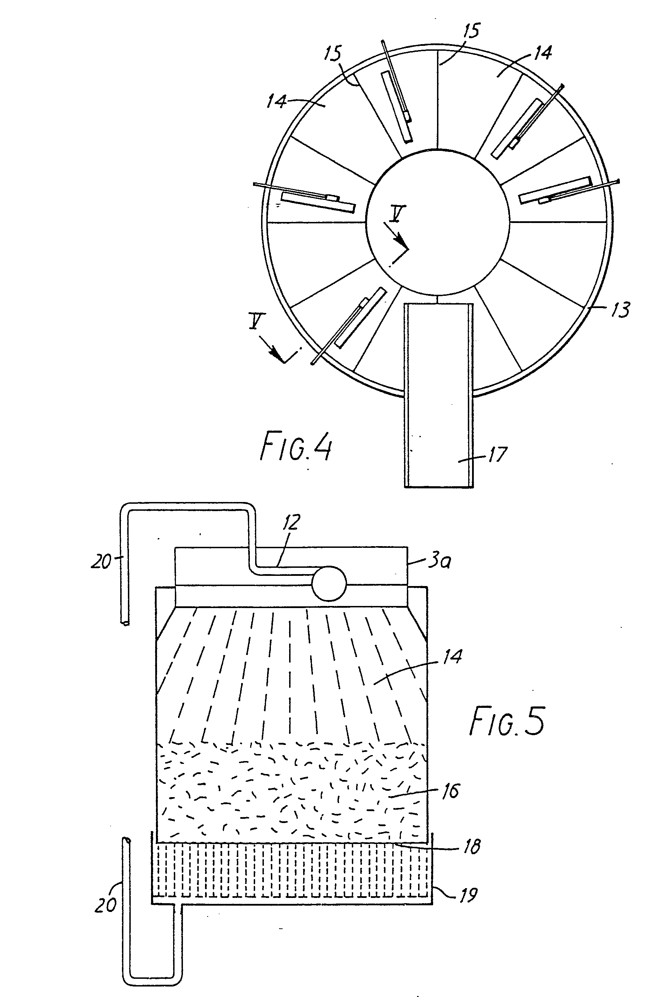

In use, a substantially cylindrical substrate container 13 shown in Fig. 4, divided into substrate beds 14 by radial walls 15 rotates beneath an array of liquid distribution devices according to the invention. Conveniently, these are arranged radially of the substrate container 13, and the ends 3a remote from the liquid inlets 12 are directed towards the axis of rotation of the substrate container. Substrate 16 enters the substrate beds 14 by means of, for example, a chute 17, charged by means of a funnel (not shown) from a bulk source of untreated tobacco. The chute 17 may be vibrated so that tobacco enters the substrate bed 14 being filled from the sides of the chute, ensuring even distribution of the tobacco within the substrate bed. It then passes beneath the liquid distribution devices which provide a substantially radially uniform sheet of eluant. The eluant passes through the substrate 16 and drains through the perforated base 18 of the substrate container 13 into a tray 19 beneath the container.

From this tray it is pumped through pipe 20, to the inlet 12 of the distribution arm. The eluant may also pass through one or more stages of treatment, not shown.

The floors 18 of the substrate beds 14 are hinged, and are openable when a given substrate bed has completed almost one revolution after filling, so that the treated tobacco is removed. The tray 19 is suitably shaped to facilitate removal of the tobacco in this way.

By the use of this invention, tobacco or other substrate receives a more even supply of eluant than with known distribution arms of the perforated pipe type. Further, the replacement of the small holes of previous pipe arms by the narrow slit of this invention overcomes the problem of deposition of entrained solids in the arm, as the uniform flow through the slot and the absence of solid structure between openings does not permit solid deposition. Thus a steady state concentration of entrained solids may build up and be maintained, avoiding both the continuous erosion of substrate and the need for frequent cleaning of the distribution arm.

### Claims

1. A liquid distribution device comprising an elongate chamber (5) defined in part by first and second opposed side walls (1, 2) which incline towards each other over at least the lower portion (6, 7) of their height to form a slot (8), a cylinder (9) bearing a closed end (11) and an open end which opens into the chamber (5) through the first side wall (1), and a liquid inlet (12) through which liquid can be introduced substantially tangentially into the cylinder, the arrangement being such that the liquid leaving the cylinder (9) enters the chamber (5), impinges on the second side wall (2) and leaves the chamber through the slot (8) in a uniform sheet.

2. A device according to claim 1 wherein the cylinder is located nearer the end of the chamber remote from the liquid inlet into the cylinder, preferably at a position 2/3 of the distance along the chamber away from the liquid inlet.

3. Apparatus for extraction of a solid with liquid in which a liquid distribution device according to claim 1 or 2 is mounted for relative movement with the upper surface of a bed of the solid.

### Revendications

1. Dispositif distributeur de liquide comprenant une chambre allongée (5) formée en partie pas une première (1) et une seconde (2) de deux parois latérales opposées qui sont inclinées l'une vers l'autre, au moins dans une zone inférieure (6, 7) de leur hauteur de manière à former une fente (8), un cylindre (9) comprenant une extrémité fermée (11) et une extrémité ouverte qui débouche dans la chambre (5) par la première paroi latérale (1), et une entrée de liquide (12) à travers laquelle du liquide peut être introduit d'une manière sensiblement tangentielle dans le cylindre, la disposition étant telle que le liquide quittant le cylindre (9) pénètre dans la chambre (5), frappe la seconde paroi latérale (2) et quitte la chambre (5) à travers la fente (8) sous forme d'une nappe uniforme.

2. Dispositif selon la revendication 1, dans lequel le cylindre est logé près de l'extrémité de la chambre opposée à l'entrée du liquide dans le cylindre, de préférence à un emplacement situé aux 2/3 de la longueur de la chambre à partir de l'entrée.

3. Appareil pour operation d'extraction d'une matière solide au moyen d'un liquide, dans lequel un dispositif de distribution de liquide selon la revendication 1 ou la revendication 2 est monté de manière à pouvoir être déplacé en mouvement relatif par rapport à la surface supérieure d'un lit de la matière solide.

### Patentansprüche

1. Flüssigkeitsverteilungsvorrichtung mit einer durch erste und zweite gegenüberliegende Seitenwände (1, 2) teilweise definierten länglichen Kammer (5), welche Seitenwände zum Bilden eines Schlitzes (8) wenigstens im unteren Teil ihrer Höhe zueinander geneigt sind, einem ein geschlossenes Ende (11) und ein offenes Ende aufweisenden Zylinder (9), welcher durch die erste Seitenwand (1) hindurch in die Kammer (5) mündet, und einem Flüssigkeitseinlass (12) durch welchen Flüssigkeit im wesentlichen tangential in den Zylinder eintreten kann, die Anordnung ist derart, dass die in den Zylinder (9) eintretende Flüssigkeit in die Kammer (5) eintritt, auf die zweite Seitenwand (2) auftrifft und die Kammer durch den Schlitz (8) in der Form einer gleichmässigen flächenförmigen Strömung verlässt.

2. Vorrichtung nach Anspruch 1, dadurch gekennzeichnet, dass der Zylinder näher bei demjenigen Ende der Kammer angeordnet ist, das dem Flüssigkeitseinlass in den Zylinder abgewendet ist, vorzugsweise an einer Stelle, die 2/3 der Länge der Kammer vom Flüssigkeitseinlass entfernt ist.

3. Einrichtung zum Extrahieren eines eine Flüssigkeit enthaltenden Festkörpers, in welcher eine Flüssigkeitsverteilungsvorrichtung nach einem der Ansprüche 1 oder 2 zum relativen Verschieben gegenüber der Oberseite eines Bettes für den Festkörper angeordnet ist.

FIG.1

FIG.2

FIG.3

FIG.4

FIG.5